# EUROPEAN PATENT APPLICATION

(11) **EP 3 061 950 A2**
(43) Date of publication of application: **31.08.2016**
(21) Application number: 16152383.2
(22) Date of filing: 22.01.2016
(51) Int. Cl.: F02D 17/02, F16H 3/72, F16H 47/02, F16H 37/02

(54) **INTERNAL COMBUSTION ENGINE HAVING A SPLIT CRANKSHAFT**

(30) Priority: 06.02.2015 GB 201501999
(71) Applicant: Jaguar Land Rover Limited, Warwickshire CV3 4LF (GB)
(72) Inventor: Turner, James, Coventry, Warwickshire CV3 4LF (GB)
(74) Representative: Borton, Claire

(57) **Abstract**

An internal combustion engine (10) is provided with a crankshaft which may be split to support deactivation of some cylinders when the engine is operating at light load. Aspects of the present invention relate to apparatus to control the speed and position of the deactivated portion of the crankshaft (14) in order to synchronise with the active portion of the crankshaft (12). The apparatus includes a CVT or IVT transmission (16) to control the synchronisation and an additional coupling (21) to provide efficient torque transmission between the portions of the crankshaft, particularly at high loads. Additional apparatus and methods may provide electrical control of synchronisation, additional electrical drive and regeneration. Further apparatus may provide one or more variable balancer shafts to maintain balance in both connected and disconnected operating modes. Aspects of the invention also relate to a method of controlling a variable lift camshaft in support of the crankshaft connection and disconnection without the need for multiple camshafts and associated drive apparatus.

## Description

### TECHNICAL FIELD

The present disclosure relates to a split crankshaft of, for example, an internal combustion engine and particularly, but not exclusively, to an apparatus and method for connection of a split crankshaft by variable transmission and clutch means. Aspects of the invention relate to an engine, to a method and to a vehicle.

### BACKGROUND OF THE INVENTION

It is known that an internal combustion engine, such as that used in a motor vehicle, will operate for extended periods at a small proportion of its maximum power output. At such times operation of only a portion of the engine may be necessary to satisfy the power required, and by disconnecting the unused portion of the engine, associated losses may be reduced.

US4069803A (General Motors Corporation) discloses a clutch mechanism which is located between portions of a split crankshaft in an internal combustion engine and which allows a portion of the engine to be stopped and the remaining portion to supply power to drive a motor vehicle. Several other mechanisms have previously been published which allow for connection and disconnection of a partitioned or split crankshaft and control the relative position when connected in order to provide a regular torque output from the engine.

In all cases there is a conflict between controlling the relative position of the crankshaft portions and smoothing the transition between disconnection and connection. As an example of this issue in its simplest form, a dog clutch engaging at speed would allow substantially instantaneous connection of the crankshaft but would generate an impulse which is likely to be apparent to the driver. Additionally, in this example the speeds of the crankshaft portions would be averaged according to their relative inertia, slowing the output. Further, in this example the positional relationship between the portions of the crankshaft may not be correctly rotationally synchronised, resulting in an unbalanced firing sequence.

It is an aim of this invention to address one or more of the above issues. Embodiments of the invention may enable a smooth transition from a disconnected condition of a split crankshaft to a connected condition and achieve the correct angular relationship between crankshaft portions when connected. The control of secondary systems, including valve actuation and balancer shafts, is also considered for synchronisation with the crankshaft connection or disconnection.

### SUMMARY OF THE INVENTION

Aspects of the present invention relate to a drive mechanism for controlling the relative rotation of the portions of a split crankshaft in an internal combustion engine, a variable balancer shaft and a method for control of a continuously variable valve system for an internal combustion engine.

According to an aspect of the present invention there is provided an internal combustion engine comprising: a crankshaft comprising at least first and second portions;
coupling means for selectively coupling the first and second portions together; and transmission means operable to synchronise connection of said first and second portions.

This apparatus may allow deactivation of a number of cylinders while the remaining cylinders provide torque to the flywheel. Additionally, synchronisation of the two portions of said crankshaft during connection or disconnection may be facilitated by the use of a CVT as the transmission means. For example, a six cylinder engine may have a crankshaft in two portions, each connected to three pistons. This would allow the engine to operate as a three or six cylinder unit. When the engine operates in the three cylinder mode, the inactive cylinders would be allowed to stop and the frictional losses associated with these cylinders would be removed. Various engine configurations may allow various modes of operation with some cylinders active and others inactive. Additionally, the synchronisation apparatus may be applied one or more times to an engine. For example with a crankshaft split in two places it may be possible for a V8 engine to operate as a V6 or V4. The coupling means may comprise a clutch such as a friction or dog clutch. This may allow transmission of driving torque without the use of the CVT. Because the CVT is required to transmit synchronisation torque rather than full drive torque, the size, weight and torque capacity of the CVT may be reduced.

Various CVT apparatus are available with configurations which have either coaxial or offset input and output axes. The apparatus may optionally comprise any CVT mechanism with the location of the variator (ratio varying apparatus) aligned with the crankshaft axis, an offset parallel axis or both. The input to the variator may be directly driven from one portion of the crankshaft or may be driveably connected through gears or an endless drive such as a chain or belt. Similarly, the output from the variator may directly drive another portion of the crankshaft or may be driveably connected through gears or an endless drive such as a chain or belt. CVT transmissions are well known with drive mechanisms employing rollers, spheres, belts, chains, gears, magnets, hydrodynamic or hydrostatic means.

Optionally the apparatus may comprise a hydrostatic CVT consisting of a hydraulic pump driveably connected to the permanently driving crankshaft portion and a variable displacement hydraulic motor driveably connected to another crankshaft portion. The hydraulic pump may also be used as an engine oil pump to provide lubrication and cooling flow of engine oil and may also have variable displacement. When the crankshaft portions are connected, the hydraulic motor may be configured to supply engine oil for lubrication and cooling in addition to another engine oil pump. Advantageously this may allow said engine oil pump to be a smaller size or more efficient in operation because it no longer needs to fulfil the entire performance envelope.

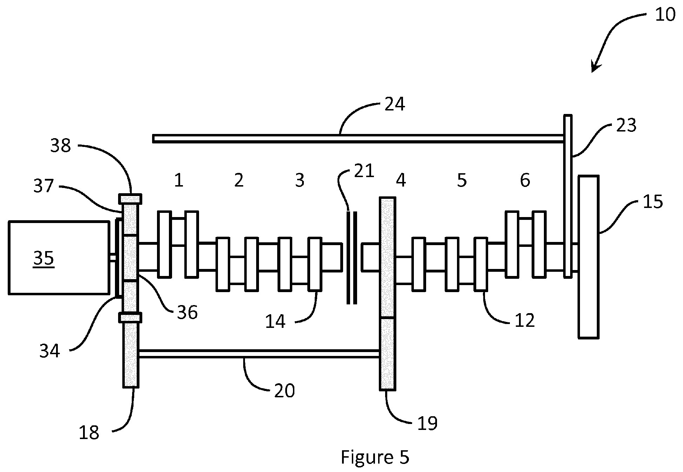

Optionally the apparatus may comprise an electrically driven powersplit transmission configured as the CVT to synchronise the crankshaft portions. Powersplit transmissions are known within the context of automotive transmissions and may comprise epicyclic, bevel or magnetic gearing. In this embodiment, the powersplit may comprise an epicyclic gear with connections to the two crankshaft parts and an electric machine. The epicyclic gearset imposes a speed balance between three elements (a sun gear, one or more planet gears supported on a carrier and an annular gear). By enforcing a speed on one of the elements by control of the electric machine, the speed ratio of the remaining two is fixed. This configuration may support the synchronisation and positional alignment of the crankshaft portions. Alternatively, by releasing control of the electric machine, the speeds of the remaining two elements are no longer controlled and may be allowed to diverge. In the embodiment shown in Figure 5, the inactive part of the crank may be stationary and the active part rotating. In this state the electric machine will be freely rotating at a speed between the two crank parts, the exact speed being calculated by the ratio of gear teeth. By energising the electric machine and controlling it to match the speed of the active part of the crank, it will drive the inactive part to also match the speed of the active part.

Optionally, the apparatus may comprise a secondary connection such as a dog clutch, spline or other torque connection. This secondary connection may provide a positive link between the crankshaft portions maintaining relative rotational position and allowing high torque transfer when the engine is required to supply drive torque across the connection. Where an electrically driven CVT is used, locking this connection may additionally allow electrical drive or electrical regeneration from the engine, vehicle or both.

Optionally the apparatus may include one or more exhaust catalysts in order to reduce emission of undesirable gases. The exhaust paths from groups of cylinders associated with the portions of the crankshaft may be separately routed to portions of the catalyst and may be combined after the catalyst. This separation allows the exhaust gases to interact with an appropriately configured catalyst in the cases where the crankshaft is connected or disconnected. For example, this may allow a smaller catalyst to be active when a reduced number of cylinders are active, improving warm up time and catalyst temperature.

Although motor vehicles commonly use four stroke engines and the apparatus may comprise a four stroke engine, optionally the apparatus may comprise a two stroke or rotary engine. It is also possible to combine differing engine cycles or configurations with the ability to connect or disconnect the linking crankshaft. For example one or more four stroke cylinders may be engaged for drive through a portion of the crankshaft and assisted at high load by one or more two stroke cylinders through another portion of the crankshaft and it will be apparent that various other combinations are possible.

Optionally the apparatus may include one or more balancer shafts which may be driveably connected to the portions of the crankshaft. It will be apparent to a person skilled in the art that the disconnection of a portion of the crankshaft will change the engine balance and in general a reduced number of active cylinders will degrade the engine balance. The increased balance compensation required when portion of the crankshaft is disconnected would conventionally require the connection of an additional synchronised balancer shaft as the crankshaft coupling is disconnected. In embodiments, the balancer shaft or shafts may be permanently connected, but the action of the eccentric mass or masses may be modified by variation of their active radius. The actuation of this apparatus may be linked to the connection of the crankshaft or independently controlled. To balance the reciprocating mass of the engine a balancer mass may be provided on a shaft rotating in a geared relationship with the crankshaft. In order to reduce or increase the effect of this balancer mass its position relative to the rotating axis of its supporting shaft may be modified. So, if the balancer mass were moved to a small radius its effect would reduce. Alternatively, moving the balancer mass to a larger radius would increase its effect. This effect may be achieved by pivotally mounting the balancer mass to the balancer shaft and enforcing a change to the angle of the pivot. For example, if the angle of the pivot were 90° then the balancer mass would have a maximum effect whereas if the angle of the pivot were 0° then the balancer mass would have minimal effect.

In a further aspect of the invention for which protection is sought there is provided a method of controlling a CVT to smoothly accelerate a stationary crankshaft portion to closely match speed and relative position with a rotating crankshaft portion. Separate encoders or a differential encoder may be provided for the two portions of the crankshaft to provide speed and position information to a controller. The controller then actuates the apparatus to change the variator ratio and achieve the synchronisation of the crankshaft. Finally the coupling means may be brought into engagement in order to maintain synchronisation.

Optionally a method of control may be applied to variable lift valves which may consist of conventional control for the valves operating the running portion of the engine and different operational modes for the portion of the valvetrain associated with the disconnected portion of the crankshaft. The modes of operation may include reducing the lift of the valves associated with the disconnected portion of the crankshaft. In this condition the actuation of some valves may not be synchronised with the piston movement and so valve contact with the piston may occur at full lift. Reducing the lift of the relevant valves may mitigate this error state and avoid the need for one or more secondary camshafts and associated drive apparatus. The modes of operation may optionally extend the valve opening duration even to the extent of maintaining a small opening over a complete cycle of the crankshaft in order to reduce pumping reaction. This mode may be appropriate when the disconnected portion of the crankshaft is being accelerated. A further mode of operation may be to close one or more valves associated with the disconnected portion of the crankshaft. This mode may be used to reduce any undesirable cooling effect on deactivated cylinders and also more quickly slow the disconnected portion of the crankshaft.

Optionally a method may be provided to control a secondary coupling, such as a dog clutch or friction clutch, in order to maintain the positional alignment of the crankshaft portions when the portions have been synchronised. This may advantageously allow the use of a CVT with low torque capacity and associated higher control accuracy while the secondary coupling is able to transmit the required torque at high engine load. Because the synchronisation of the crankshaft portions is achieved by the CVT, it is not necessary for the coupling to provide this function although it may be advantageous.

Optionally an electrical powersplit CVT may be controlled in conjunction with the operation of a secondary coupling. The electric machine may provide control of the synchronisation of the crankshaft portions when the secondary coupling is disconnected. When the secondary coupling is connected, the electric machine is then connected to the crankshaft and may be used to provide additional drive through the crankshaft. Conversely, the electric machine may also be used to provide electrical generation taking drive from the crankshaft.

Optionally a method may be provided to control the position of one or more balance weights on one or more balancer shafts. The method may include the detection of the balance requirement based on the connection status of the crankshaft and control of an actuator to change the acting radius of one or more balance weights. The method may further detect engine vibration caused by poor balance and control the position of one or more balance weights in order to improve overall balance and reduce associated engine vibration. Operation of the balance weights may be independently controlled by an electronic control unit or be linked to the control of other apparatus. For example, the actuation of one or more balance weights may be hydraulically controlled using a control pressure linked to the actuation of the secondary coupling.

In the specific case of a rotary engine, it will be appreciated that the term 'crankshaft' is not commonly used and instead the term 'eccentric shaft' is appropriate to describe the shaft transmitting drive between and from the rotors. For the purpose of brevity the term 'crankshaft' is used in this application to cover both terms. Similarly, where 'cylinders' or 'pistons' are referred to in the text, the rotary engine equivalent would be 'rotor housings' or 'rotors'.

It will further be appreciated that the term 'flywheel' may not be strictly appropriate to all engines. For example, drive from an engine to an automatic transmission will conventionally be transmitted through a flexplate to the torque converter with no flywheel. In this application the term 'flywheel' is intended to describe either a single or dual mass flywheel or a flexplate.

It will also be appreciated that where a continuously variable transmission (CVT) is described, an infinitely variable transmission (IVT) may be equally or more appropriate. Further, the CVT transmission may require a starting device such as a clutch to encourage a stationary member to begin to rotate. In this specification the term CVT is therefore intended to describe either a CVT transmission including a starting device or an IVT.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of an engine with a split crankshaft coupled by a CVT or IVT according to an embodiment;
Figure 2 shows a schematic representation of an alternative embodiment with the CVT or IVT located coaxially with the crankshaft;
Figure 3 shows a schematic representation of a further embodiment wherein the CVT or IVT is located between the crankshaft and a second parallel shaft;
Figure 4 shows a schematic representation of an additional feature with a balancer shaft incorporating an adjustable balancing mass;
Figure 5 shows a schematic representation of a further embodiment whereby the CVT or IVT is provided by electrically driven power split gearing;
Figure 6 shows an embodiment where the engine has a vee configuration with parallel crankshaft portions geared together; and
Figure 7 shows a schematic plan view of a vehicle comprising a powertrain with an engine according to an embodiment.

### DETAILED DESCRIPTION

An internal combustion engine using a CVT transmission to synchronise the connection or disconnection of a split crankshaft in accordance with an embodiment of the present invention is described herein with reference to the accompanying figures. In the figures, like reference numerals indicate like parts.

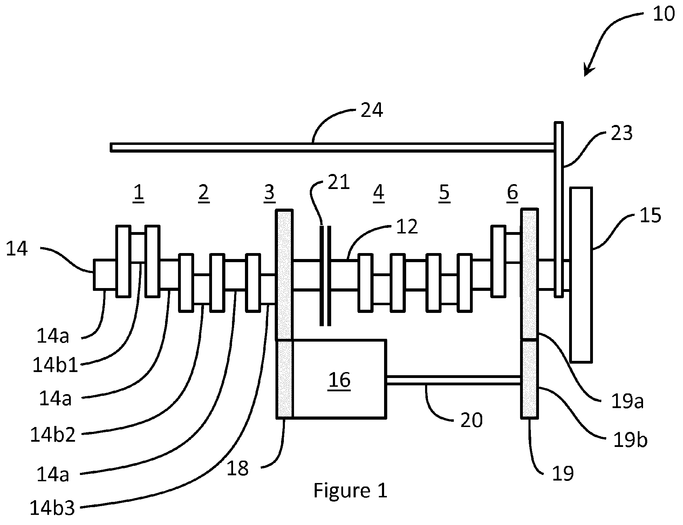

With reference to Figure 1, the cylinder numbers 1-6 for an in-line six-cylinder engine 10 are shown. The crankshaft comprises two coaxial portions 12,14. A first 'active' portion 12 of the crankshaft is associated with cylinders 4-6 of the engine (cylinders, connecting rods and pistons are not shown) and is driveably connected to a flywheel 15 configured to supply drive torque to a transmission. A second "passive" portion 14 of the crankshaft is similarly associated with cylinders 1 to 3 and is configured to be selectively disconnected from the first portion 12 so as to permit the deactivation of the associated cylinders 1-3. The second portion of the crankshaft 14 comprises a number of main bearing journals 14a and throws 14b1-14b3. The crankshaft portion is thus constrained to rotate about the main bearing journals 14a and the connecting rod for piston 1 (not shown) is rotatably connected to throw 14b1. Similarly connecting rods for cylinders 2 and 3 are respectively connected to throws 14b2 and 14b3. The first portion of the crankshaft 12 is similarly configured. Disconnection of these cylinders allows them to cease rotation and so reduces the frictional losses associated with their movement. When the torque required by a driver may be provided by the first portion of the crankshaft 12 alone, disconnection of the second portion 14 provides improved efficiency while meeting the driver demand.

A CVT transmission 16 is configured to connect the first portion 12 of the crankshaft to the second portion 14 through gear trains 18, 19 and a shaft 20. Gear trains 18 and 19 may each comprise a first gear connected and concentrically mounted to the respective crankshaft portion 12, 14 and a second gear connected and concentrically mounted to the CVT 16 or shaft 20. For example gear train 19 comprises a first gear 19a connected to the first crankshaft portion 12 and a second gear 19b connected to the shaft 20. Gear trains 18 and 19 may comprise further idler gears and may have differing ratios. It is to be noted that the transmission 16 is arranged to synchronise the two portions 12, 14 of the crankshaft and may be separate from a transmission driven through the flywheel 15 and providing drive to one or more wheels of the vehicle. A secondary connection is provided between the portions 12, 14 of the crankshaft. This secondary connection consists of a clutch 21 able to transmit the torque generated by cylinders 1-3 into the first portion of the crankshaft. The clutch 21 allows the CVT 16 to be reduced in size and weight and provides an efficient coupling between the crankshaft portions 12, 14. Because the CVT 16 is required to transmit synchronisation torque rather than full drive torque, its size, weight and torque capacity may be reduced. Losses associated with the CVT 16 and gear trains 18 and 19 may be reduced by the transmission of drive torque through the clutch 21 rather than the CVT 16, thereby improving efficiency.

A drive mechanism 23 such as a belt, chain or gear train for one or more camshafts 24 is provided and the valves are conventionally controlled through a variable valve lift system. In the case of a six-cylinder, in-line engine, it is conventional to provide separate camshafts for inlet and exhaust valves and embodiments of the present invention may make use of this system with an enhanced control method to vary the valve lift to the disconnected portion of the crankshaft. In order to smooth the deceleration or acceleration of a portion of the crankshaft, one or more valves may be operated with reduced lift or duration in order to reduce the air mass contained in the cylinders. Alternatively individual cylinders may be configured to contain different air masses in order to encourage the second crank portion 14 to stop in a specific angular position. This may also allow air to be entrapped in some cylinders, improving start time.

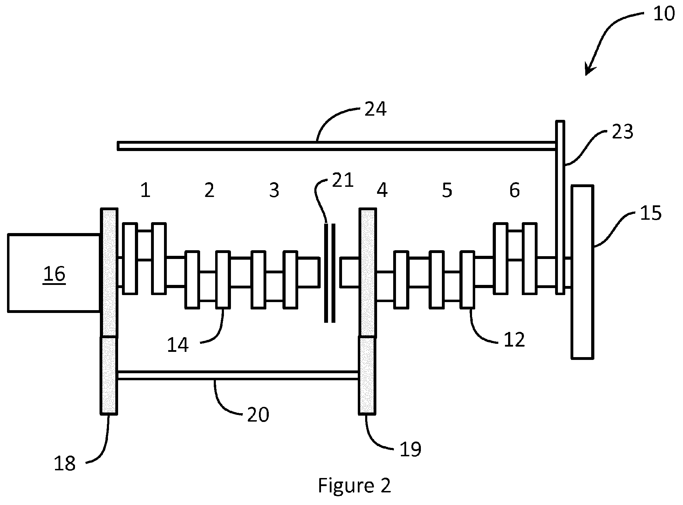

With reference to Figure 2, in this embodiment the CVT 16 is located coaxially with the crankshaft parts 12, 14 providing synchronising drive through gear trains 18, 19 and a shaft 20 substantially parallel to the crankshaft. Operation of this embodiment is substantially identical to that of Figure 1.

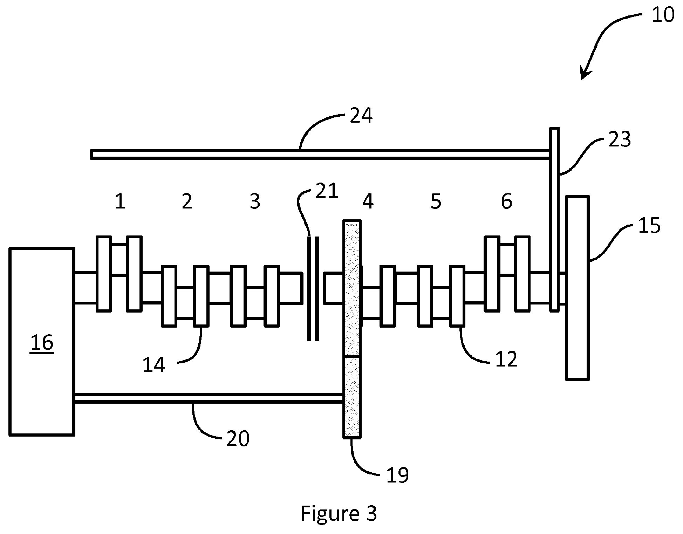

With reference to Figure 3, the CVT or IVT (16) is configured with its input and output on different, substantially parallel axes. The synchronising drive between the crankshaft portions 12, 14 is then achieved through a shaft 20 and gears 19. Again, operation of this embodiment is substantially identical to that of Figure 1.

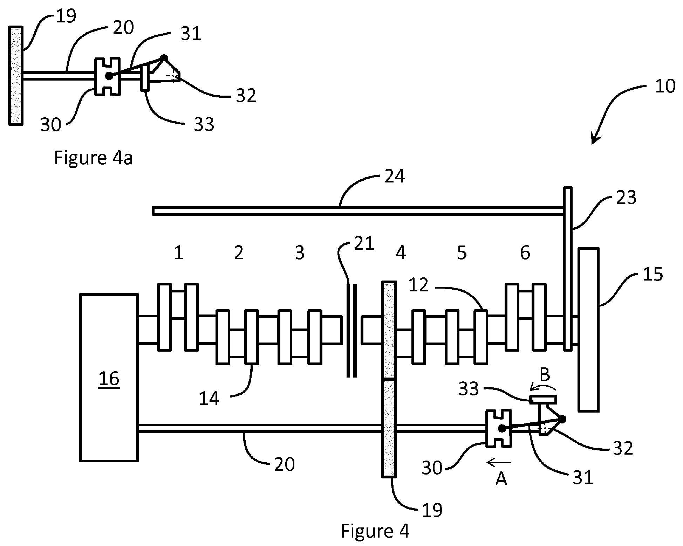

With reference to Figure 4, the synchronisation shaft 20 is additionally used to improve engine balance. This requires a 1:1 gear ratio for drive gears 19 so the shaft 20 turns at the same speed as the crankshaft in the opposite direction. A balance mass 33 is attached to the balancer shaft 20 by a hinged connection 32 in order to vary the radius of action of the balance weight. In this embodiment, the hinged connection is connected to a sleeve 30 by a link 31. The sleeve 30 may then be actuated to move in the direction of arrow A and the balance mass 33 will then rotate in the direction of arrow B about the hinge 32 to a reduced radius of action. Various alternative mechanisms may be designed to achieve the effect of actuating one or more masses to move from a high balancing effect to a low balancing effect. The balancer shaft 20 is shown here using an extension to the synchronising shaft 20 and it will be appreciated that this may be more difficult to achieve and that two separate shafts may be required in a particular application. Figure 4a shows the balance mass 33 in the actuated position where it has minimal balancing effect. In this position, sleeve 30 has moved to the left along shaft 20. This pulls link 31 which rotates the balance mass 33 about pivot 32. The balance mass 33 is now shown in a location concentric with balancer shaft 20.

With reference to Figure 5, the CVT or IVT 16 consists of a power split arrangement including an electric machine 35 driving the carrier 34 of an epicyclic gearset. The carrier 34 supports planet gears 37 which mesh with a sun gear 36 and annulus 38 in a conventional manner. The sun gear 38 is driveably attached to the second crankshaft portion 14 and the annulus is geared through a shaft 20 and gearsets 18, 19 connecting to the first crankshaft portion 12. When the secondary coupling 21 is disengaged, the electric machine is able to control the relative speed between the portions of the crankshaft. When the secondary coupling 21 is engaged, the electric machine 35 may be used as a motor or generator attached to the crankshaft.

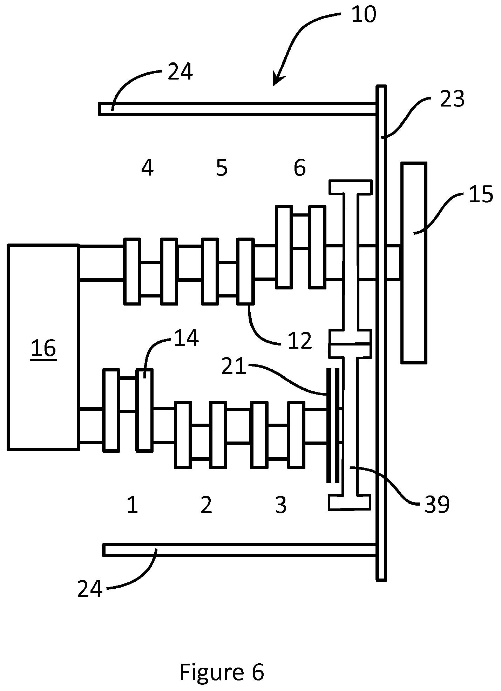

With reference to Figure 6, the crankshaft portions 12, 14 are substantially parallel in a vee configuration engine. Transfer gears 39 are provided to connect the portions 12, 14 together and a clutch 21 is provided for disconnection of one portion. The CVT 16 connects between the crankshaft portions 12, 14 and is able to control the relative speed thereof.

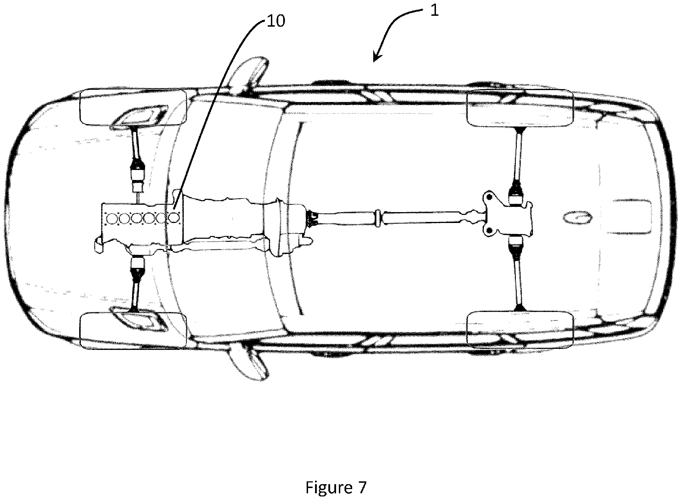

Figure 7 shows a schematic plan view of a vehicle 1 comprising a powertrain with an engine 10 according to an embodiment.

## Claims

1. An internal combustion engine comprising:
a crankshaft comprising at least first and second portions;
coupling means for selectively coupling the first and second portions together; and
transmission means operable to synchronise said first and second portions.

2. An engine according to claim 1 wherein said transmission means comprises a CVT operable to control synchronisation of said crankshaft portions.

3. An engine according to claim 2 wherein said CVT comprises an Infinitely Variable Transmission (IVT).

4. An engine according to claim 2 wherein said CVT comprises a Continuously Variable Transmission variator and a clutch.

5. An engine according to any of claims 2 - 4 wherein said CVT comprises one or more operational axes and is positioned such that at least one of said axes runs substantially parallel but offset from an axis of at least one crankshaft portion.

6. An engine according to any of claims 2 - 4 wherein said CVT is positioned such that an operational axis runs coaxially with an axis of at least one crankshaft portion.

7. An engine according to any of claims 2 - 6 wherein said CVT driveably connects one portion of the crankshaft through an axis offset from its rotational axis to another portion of the crankshaft by means of gears and/or an endless drive system.

8. An engine according to any of claims 2 - 7 wherein said CVT comprises a hydraulic pump attached to one portion of the crankshaft and a variable displacement hydraulic pump is attached to another portion of the crankshaft providing a hydrostatic drive.

9. An engine according to any of claims 2 - 7 wherein said CVT comprises an electrically driven power split system using epicyclic, bevel or magnetic gearing.

10. An engine according to any preceding claim comprising a secondary connection disposed on a common axis with at least one crankshaft portion operable to substantially rigidly connect the first and second crankshaft portions to prevent relative rotation thereof.

11. An engine according to claim 10 wherein said secondary connection comprises a dog clutch.

12. An engine according to claims 10 or 11 wherein said secondary connection provides a torque connection at high engine load and/or to provide electric drive.

13. An engine according to any preceding claim wherein an exhaust catalyst is partitioned such that a portion of the catalyst will receive exhaust gas from combustion chambers associated with the first crankshaft portion.

14. An engine according to any preceding claim wherein said engine is one of a four stroke engine, a two stroke engine or a rotary engine.

15. An engine according to any preceding claim comprising one or more balancer shafts wherein the radius of one or more balancing masses may be varied either passively or actively in association with the connection or disconnection of the first and second portions of the crankshaft.

16. A method of connecting two or more portions of a crankshaft whereby a first portion of the crankshaft is rotating, comprising:
controlling a transmission means to accelerate a second portion of the crankshaft to a speed substantially matching the speed the first portion of the crankshaft; and
engaging coupling means to connect the two portions of the crankshaft.

17. A method according to claim 16 wherein controlling the transmission means comprises:
engaging a CVT with two or more portions of the crankshaft; and
controlling the CVT ratio to smoothly accelerate one or more portions of the crankshaft.

18. A method according to claim 16 or 17 comprising:
disconnecting the two portions of the crankshaft; and
controlling one or more inlet or exhaust valves to reduced valve lift and/or extended opening duration for some or all valves associated with one crankshaft portion.

19. A method according to claims 16 or 17 comprising:
controlling engagement of a secondary coupling between the portions of the crankshaft when the portions have been synchronised.

20. A method according to any one of claims 16 to 19 comprising:
operating an electric power split between said two or more portions of the crankshaft to synchronise the speed and position thereof;
controlling a secondary coupling to connect said two or more portions of the crankshaft; and
operating the electric power split after connection to provide drive assistance or electrical generation.

21. A method according to any one of claims 16 to 20 comprising:
controlling a balancer shaft mechanism to adjust the acting radius of a balance weight according to the state of the crankshaft synchronisation.

22. A vehicle incorporating an engine as claimed in any preceding claim.

23. A vehicle, an engine, and/or a method substantially as described herein with reference to Figures 1 to 7.
